# EUROPEAN PATENT APPLICATION

(11) **EP 4 647 965 A1**
(43) Date of publication of application: **12.11.2025**
(21) Application number: 24401016.1
(22) Date of filing: 06.05.2024
(51) Int. Cl.: G06N 3/045, G06N 3/0464, G06N 3/09, G01S 7/41, G06F 21/10, G06N 3/088

(54) **APPARATUS AND METHOD FOR OBJECT DETECTION IN SENSOR DATA**

(71) Applicant: HENSOLDT Sensors GmbH, 82024 Taufkirchen (DE)
(72) Inventor: Brosch, Tobias, 89233 Pfuhl (DE)
(74) Representative: LifeTech IP Spies & Behrndt Patentanwälte PartG mbB

(57) **Abstract**

An apparatus for detecting objects in sensor data (30) by users is disclosed, wherein user credentials (60) are assigned to each user. The apparatus comprising: an input engine (110) configured to receive as input the sensor data (30); a branched neural network machine (120) with multiple branches (121, 122, 123, 124, 221, 222, 223), the multiple branches (121, 122, 123, 124, 221, 222, 223) being configured to operate at least temporarily in parallel and each branch being specialized for branch-specific input data received from the input engine (110); a credential manager (130) configured to selectively activate branches of the multiple branches (121, 122, 123, 124, 221, 222, 223) based on the user credentials (60); and a combiner (140) configured to combine outputs of the branched neural network machine (120) and to output (150) indicating, dependent on the user credentials, detected objects in the sensor data (30)

## Description

The present invention relates to an apparatus and a method for detecting objects in sensor data and, in particular, to an artificial intelligence, AI, user access management system.

### BACKGROUND

The detection and identification of objects in sensor data is of utmost importance in the military sector such as a reliable identification of friend or foe. The object detection may use all kinds of sensor data such as radar data, image data, lidar data, infrared or ultraviolet sensors, or sensors sensitive for different spectra of electromagnetic radiation. There is an increasing demand of user-specific detection where objects are detectable dependent on user credentials. For example, there are several applications wherein certain users are granted the right to access certain information, whereas the access is denied for other users. This means that certain classes of objects should be detectable only for certain classes of users.

Conventional computer-based object detection is insufficiently able to differentiate between user rights when applying an object detection routine to sensor data guaranteeing that even the knowledge about an object, the user is not authorized to know about, affects the output of the object detection routine. For example, if a user is not authorized to detect a secret object, the conventional object detection may simply filter the detected secret object for this user. This, however, may be recognizable by the user as a kind of "blind spot" in the detection results because the detection routine, focusing on the "secret object", may ignore other, apparently present non-secret objects. Such detrimental behavior may be recognizable by the user. In other words, so far, the access management for the object detection is insufficient to hide certain objects from being detected by certain users without replicating the entire object detection system.

Therefore, there is a demand for an object detection apparatus that is able to detect objects based on an access management without replicating the entire object detection system for each combination of target classes the user is permitted to detect.

### SUMMARY OF THE INVENTION

At least some of the above-mentioned problems are solved by an apparatus for detecting objects in sensor data according to claim 1, a corresponding method according to claim 11, and by a method of training the apparatus according to claim 12. The dependent claims refer to further advantageous realizations for the subject matters of the independent claims.

The present invention relates to an apparatus for detecting objects in sensor data by users, wherein user credentials are assigned to each user. The apparatus comprises: an input engine, a branched neural network machine, a credential manager, and a combiner. The input engine is configured to receive the sensor data as input. The branched neural network machine comprises multiple branches. The multiple branches are configured to operate at least temporarily in parallel. Each branch may be specialized for branch-specific input data received from the input engine. The credential manager is configured to selectively activate branches of the multiple branches based on the user credentials. The combiner is configured to combine outputs of the branched neural network machine and to provide output indicating, dependent on the user credentials, detected objects in the sensor data.

The apparatus can be any machine, device or detector which is suitable to receive sensor data from different kinds of sensors such as a radar device, a lidar device, an image capturing device, a camera, a radio signal receiving device, an acoustic sensor etc. Thus, the sensors data may be any information transmitted by electromagnetic signals (electric, magnetic, optical) from a sensor to the apparatus. According to embodiment, the apparatus can also be utilized in other context such as a data mining or data analyses, where the results (e.g. found information) depend on user credential. In such applications the object(s) may relate to data objects (piece of information). In both scenarios, the user may be classified so that each class of users may be allowed to have access to different information. Accordingly, the user credentials are rights given to classes of users to access certain information or to deny the access. For example, the classification of users may be with respect to their security clearance and dependent on the clearance. According to embodiments, some users are allowed to make use of functions provided by certain branches of the neural network and exclude other users from accessing the branches. These functions may relate, for example, to the detection of rotating blades in radar data needed to detect helicopters and/or certain drones or other functions such as rotating wheels (e.g. of vehicles), tank tracks, certain shapes (e.g. a cannon), speed, contrast, or combinations of features.

Within the present disclosure the term "branches" shall be understood broadly in that they name a region in a neural network that is specialized in providing a certain function. They can be defined by the topology of the neural network as defined by (hyper) parameters but may also be implemented dynamically. The latter may be achieved by minimizing a cross entropy loss resulting naturally in a clustering of the neural networks, wherein the clusters can be seen as branches specialized on specific functions. Embodiments may utilize both types of branches.

According to embodiments, the user credentials are stored or input in the credential manager or transferred thereto via the input engine. As set out before, the credential manager can be understood as an access management device (machine) to manage the access to information or functions provided by the branched neural network.

Optionally, the input engine includes an input layer and a base neural network machine. The input layer may be configured to receive as input the sensor data and/or the user credentials. The branched neural network machine and/or the base neural network machine may comprise or may be a convolutional neural network with multiple layers, wherein at least the first layer receives input from the input layer.

The branched neural network may together with the base neural network form a single convolutional neural network. Alternatively, or additionally, a subset or single branch may form an own neural network. Also, the base neural network machine can be seen as a separate neural network machine which may be trained independently from the remaining neural network. Moreover, each branch and the base neural network machine may have multiple layers of the convolutional neural network and may define or comprise subgraphs of an overall graph representing the total neural network.

The input layer may be an input stem layer to distribute/feed data into the convolutional neural network and/or feed the credential manager with the user credentials, e.g., from the input layer. Similarly, the combiner may include an output layer for collecting output data from the several branches and to provide the result of the detection to an exemplary user. The provided results may include an image (e.g. depicted on a display) with highlighted objects found in the sensor data (e.g. radar data). Additionally, or alternatively, the output includes a warning (optical, haptic, acoustic etc.) when a potentially dangerous object had been detected. Therefore, not only the users may be classified, but also the objects and the provided output by the output layer may depend on the class of detected objects.

Optionally, at least one of the branches and/or the base neural network machine are pre-trained with selected training data associated with one or more user credentials. This provides the advantage that the specialization can be set up from the beginning, i.e. it is known which branch will provide which function. It will ensure that a certain branch will be needed to detect particular functions needed for the detection of a classified objects, for example. Therefore, a controlled specialization is possible.

Optionally, the (whole) branched neural network machine is trained with training data, wherein the training data are sensor data of known objects. The training data can be labeled training data, wherein the labels are associated with the user credentials, and/or unlabeled training data. In the latter case, each set of training data may be assigned to one or more user credentials related to user that should be allowed to have access to information contained in the respective training data.

Upon training of a branched neural network machine, each branch will specialize themselves in branch-specific input data or branch-specific functions. After this training (i.e. the specialization of the branched neural network), the credential manager is able to selectively turn on and/or turn off or to (de-) activate the different branches to make access to the respective functions only to users who have the respective credentials.

Therefore, optionally, the one or more branches of the multiple branches are specialized for specific subtasks (e.g. a detection of object features). The detected objects may relate to classified objects (information) for which only certain users may have the allowance or clearance to detect these objects. This specialization can be tested using test data including objects, which may be detectable only by a subclass of users. To make sure that no other users can access or detect these objects, the user credentials will ensure that the branches needed for the detection are not accessible for those users which do not have sufficient user credentials (for example clearance).

Optionally, the credential manager is configured to associate the user credentials with the one or more branches and to activate the one or more branches for users with the user credentials. This has the technical effect that users have access only to that information for which they have sufficient user credentials, because a deactivated branch makes the subtask provided by this branch not available to the user.

Optionally, the credential manager is configured to selectively activate branches of the multiple branches by at least one of the following:
- controlling (hyper) parameter of the neural network;
- controlling weights of outputs of the multiple branches (e.g. weights defining the routing of neural network);
- controlling a gating mechanism, the gating mechanism being adapted to select branches to execute inputs dependent on the user credentials.

However, the (dynamical) specialization may not be known after the training. Therefore, according to embodiments, test training data (e.g. not yet used for training) may be utilized to determine which branch had been specialized for which function(s). For example, the test training data may include test objects (e.g. images or radar data of a helicopter, drone, launch pad etc.) for all classes of user credentials. Embodiments may use the results to determine the specialization, wherein the branch specialization may be determined after having trained the neural network.

Optionally, the multiple branches of the branched neural network machine form a multilevel structure including a first level of branches and a second level of branches. The combiner may include a first combiner and a second combiner. The first combiner may be arranged between the first level of branches and the second level of branches and may be configured to collect outputs of the first level of branches and/or to distribute/feed inputs to the second level of branches. The second combiner being configured to combine outputs of the second level of branches.

Optionally, the apparatus further comprises a predictor configured to predict from the outputs of the branched neural network detected objects in the sensor data. The predictor may likewise have a neural network topology and may provide the output to an output device such as a screen, loudspeaker, display, haptic device etc.

Further embodiments relate a radar object detector that comprises an input interface for receiving radar data from a radar assembly and/or user credentials associated with different users. The detector further comprises an apparatus as described before and an output interface. The output interface is adapted to provide detection results (e.g. as electronic data) associated with detected objects in the radar data based on the user credentials.

Further embodiments relate a method for detecting objects in sensor data (e.g. radar data) by users, wherein user credentials are assigned to each user. The method comprises:
- receiving as input the sensor data;
- feeding input data derived from the sensor data into a branched neural network machine with multiple branches, the multiple branches being configured to operate at least temporarily in parallel and each branch being specialized for branch-specific input data received from the input engine;
- selectively activating, by a credential manager, branches of the multiple branches based on the user credentials;
- combining outputs of the branched neural network machine; and
- providing an output indicating, dependent on the user credentials, detected objects in the sensor data.

Further embodiments relate a method of training the apparatus as described before. The method includes:
- providing of training data, the training data representing sensor data for one or more candidate objects;
- feeding the training data into the apparatus; and
- providing feedback about detected objects (whether or not the detected object agree with the known objects in the training data).

The training data may include all possible objects, independently of their classification. The neural network as described before will specialize itself in that one or more branches will take over (specialized themselves for) specific functions related to the object detection. If the branches are pretrained for specific functions, this training may further reinforce the already present specialization.

However, optionally, the method for training further includes determining a specialization of the branched neural network based on test sensor data. The test sensor data may include one or more objects being assigned to one or more specific user credential (e.g. a particular kind of helicopter, drone, tank, civilian vehicle, launch pad etc.). By subsequently deactivating branches, it is possible to determine which branch is responsible for the detection (e.g. the detected object will disappear when the responsible branch in deactivated).

The method may further include assigning one or more branches to at least one class of users in accordance with the user credentials. This assignment may then be stored in the credential manager. Thus, the apparatus is able to activate for each user class respective branch(es) to grant them the right to make use of the function(s) provided by the branch(es).

A person of skill in the art would readily recognize that steps of the method(s) may be performed by programmed computers. Therefore, this method may thus be a computer-implemented method. Embodiments are also intended to cover program storage devices, e.g., digital data storage media, which are machine or computer readable and encode machine-executable or computer-executable programs or instructions, wherein the instructions perform some or all of the acts of the above-described method(s), when executed on the computer or processor.

In summary, embodiments provide special measures that ensure that certain training data such as classified information can only affect distinct structures of the neural network(s) such as branches or structures of any kind that does not leak into other parts of the neural network implementing an AI system. Moreover, embodiments enable or disable those branches/structures of the AI system based on access privileges of users (i.e. the user credentials) at inference time. The inference time refers to the usage of the apparatus by a user (runtime). The training and the usage can be done after each other or interleaved or at the same time. In a typical situation, the apparatus will be trained in advance before it will be used. However, according to embodiments, the training can be further improved during the usage so that a constant improvement of the apparatus is possible.

This provides several advantages over conventional AI systems that lack the capability to perform differently based upon the access rights a user has. For example, a typical conventional AI system operates for any user in the same way, meaning that a conventional AI system will detect objects in sensor data independently of the rights the user has. To hide certain knowledge encoded in the AI system from some users and to allow other users to access this information, conventional systems rely on multiple AI systems that are trained separately and operate independent from each other. Embodiments overcome this complexity. The aforementioned methods do not just omit target classes, a user is not authorized to have knowledge about, in its output layer. Rather, embodiments guarantee that the system is not affected by knowledge a user is not authorized to have access to.

### BRIEF DESCRIPTION OF THE DRAWINGS

Various embodiments of the present invention will be described in the following by way of examples only, and with respect to the accompanying drawings, in which:
- Fig. 1: depicts an apparatus for detecting objects in sensor data according to an embodiment.
- Fig. 2: shows the apparatus according to further embodiments with further optional details.
- Fig. 3: depicts a schematical flowchart of a method for detecting objects in sensor data according to an embodiment.
- Fig. 4: depicts a schematical flowchart of a method for training the apparatus for detecting objects in sensor data according to an embodiment.

### DETAILED DESCRIPTION

Various examples will now be described more fully with reference to the accompanying drawings in which some examples are illustrated.

Accordingly, while examples are capable of various modifications and alternative forms, the illustrative examples in the figures will herein be described in detail. It should be understood, however, that there is no intent to limit examples to the particular forms disclosed, but on the contrary, examples are to cover all modifications, equivalents, and alternatives falling within the scope of the disclosure. Like numbers refer to like or similar elements throughout the description of the figures.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (e.g., "between" versus "directly between," "adjacent" versus "directly adjacent," etc.).

The terminology used herein is for the purpose of describing illustrative examples only and is not intended to be limiting. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, steps, operations, elements and/or components, but do not preclude the presence or addition of one or more other features, steps, operations, elements, components and/or groups thereof.

Unless otherwise defined, all terms (including technical and scientific terms) used herein have the same meaning as commonly understood by one of ordinary skill in the art to which examples belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

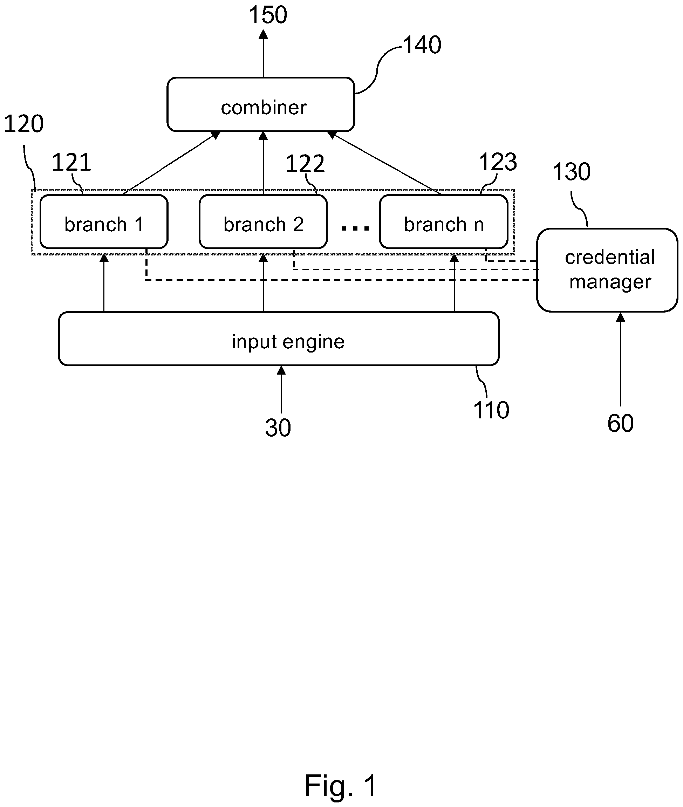

**Fig. 1** depicts an apparatus for detecting objects in sensor data 30 by users. Each user will be assigned with user credentials which can be user rights or other user privileges allowing him access user-dependent information. The apparatus comprises an input engine 110, a branched neural network 120, a credential manager 130, and a combiner 140. The input engine 110 may be configured to receive as input the sensor data 30. The credential manager 130 may receive the user credentials 60 (they can also be forwarded by the input engine 110). The branched neural network 120 may be a convolutional neural network, CNN, with multiple branches 121, 122, 123, wherein the multiple branches can have any number n (n=2, 3, 4, 5,...) of branches that are configured to operate at least temporarily in parallel.

Each branch 121, 122, ... is specialized for specific input data received from the input engine 110. The credential manager 130 is configured to selectively activate (or deactivate) branches of the n branches 121, 122, 123 based on the user credentials 60. This controlling is indicated by the dashed lines. The activation or deactivation of branches 121, 122, 123, ... can be controlled by parameters (e.g. hyperparameters, routing parameters) or by a gating function. By using these parameters, the topology of the neural network will change. Embodiments use a parameter optimization to build up the neural network most suitable for a given object detection or classification.

The combiner 140 is configured to combine outputs of the branched neural network machine 120 and to provide an output 150 indicating, dependent on the user credentials 60, detected objects in the sensor data 30. Therefore, results included in the output 150 will depend on the user, even though the same sensor data 30 may be input. For example, one user may see objects detected in the sensor data 30 while other users will see no objects. The result will depend on the user credentials 60.

For example, the objects may relate to radar target signatures of classified nature such as special military vehicles, missiles, objects, launch pads etc. Those objects shall be detectable only for those users with sufficient user credentials (e.g. for military personnel or users with sufficient clearance level), whereas other users are only allowed to detect basic objects such as civilian cars, trucks, houses, and other civilian objects. The same applies to other sensor data such as image data or other optical sensor data (e.g. from IR/UV sensors).

However, according to further embodiments, the depicted apparatus can be utilized as a data mining system that may collect classified intelligence. This classified intelligence is - for example upon training - encoded in the AI system but shall not be usable by a certain group of users.

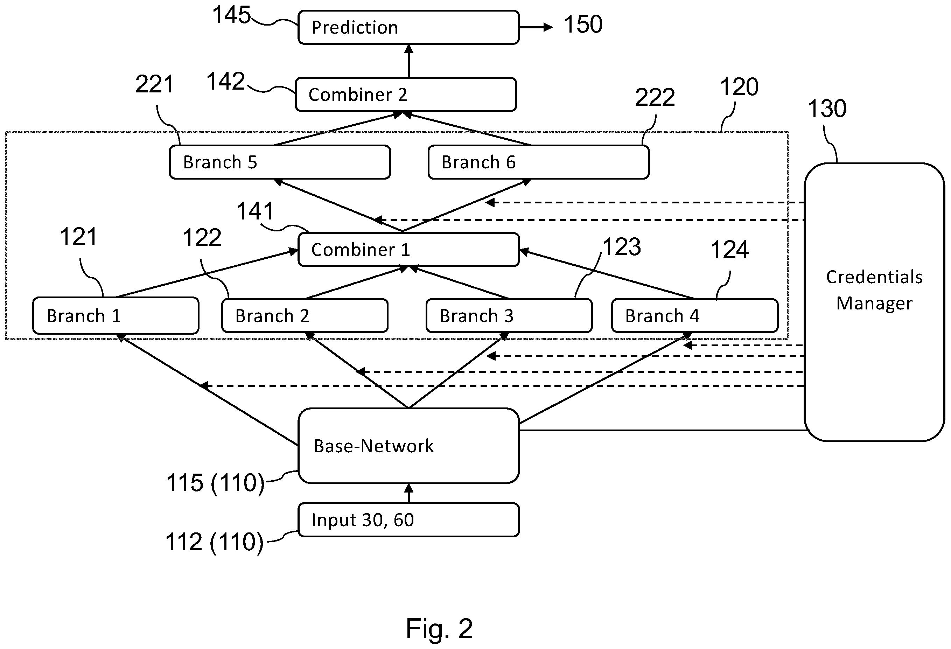

**Fig. 2** shows an apparatus according to further embodiments with further optional details. In this embodiment, the input engine 110 includes an input layer 112 and a base neural network 115 (e.g. RESNET 50; convoluted neural network with 50 layers). The base neural network 115 may include a so-called stem layer of the exemplary convolutional neural network. The branched neural network 120 has a different topology compared to the embodiment of Fig. 1. It is built by two levels, a first level includes: a first branch 121, a second branch 122, a third branch 123, and a fourth branch 124. It is understood of course that the branches can have any number, even very high number of branches (e.g., can be controlled by respective parameters). The outputs of these exemplary four branches at the first level are collected by a first combiner 141 which analyzes and/or combines these outputs and distributes the results into the second level of branches which include two exemplary branches: a first branch 221, and a second branch 222. A second combiner 142 will then collect the outputs of second level branches 221, 222 and will further process the data and subsequently forwards the output to a prediction device 145. The prediction device 145 may concretely identify detected objects and output the detection result 150 to the respective user.

It is understood that the number of levels as well as the number of branches 121, ... 210... can be selected freely. Typically, an optimization can be used to determine an appropriate number yielding best results in a short time and thus shows the best performance.

According to embodiments, the branched neural network 120 and/or the base neural network include or are a convolutional neural network (CNN), which is built up by multiple layers which are "executed" in a feed-forward data processing. The CNN can learn feature engineering by itself via filter (or kernel) optimization. Embodiments make use of an "anatomy of neural networks" showing a branch specialization like brains wherein regions of the neural network can be associated with particular functions as set out in Distill 2021: "Branch Specialization" by C. Voss et al. Accordingly, a branched neural network organizes itself in that branches will dynamically specialize in a training process for particular functions. The inventors have found out that this fact can be utilized for a user-dependent data processing if the branches allow no communication between parallel branches. Thus, a dynamically evolving neural network during training will cluster functions (connect neurons) for a given function within one branch. However, the branch may not be assigned to a detection of one particular object (e.g. a helicopter, drone or vehicle in exemplary radar data) but may compute merely characteristic features associated with the object such as the rotating blades, rotating wheels, (rotational) speed values etc. within a characteristic frequency range. Thus, by deactivating the branch, the neural network will be unable to detect the exemplary helicopter.

Thus, the neural network may assign the ability to detect a particular class of objects (with characteristic functions) to one or more branches that includes the interconnected neuron for solving this function (i.e., detecting the exemplary rotating blades characteristic for helicopter). This behavior can be enforced by omitting classified training data while connections for respective branches are being shaped by the training process (by setting the weights leading to this branch to zero in the training process, for example).

According to embodiments, the credential manager 130 controls the branches by (hyper) parameters that define the topology of the neural network and effectively turn on/off branches or make them available or hide them from remaining part of the neural network by setting the weights leading to this branch to zero, for example. Another possibility to implement this is to use a gating function as set out in Mullapudi, R. T. et al. "HydraNets: Specialized Dynamic Architectures for Efficient Inference", 2018 IEEE/CVF Conference on Computer Vision and Pattern Recognition. The described gating mechanism can be controlled by a parameter k defining the number of branches for a given input image (e.g. associated with an object class).

According to further embodiments, neural network pruning is utilized to remove neurons and/or connections that are significant, for example, for a detection of classified objects. In contrast to standard network pruning, where neurons and/or connections are removed from the network because they typically do not significantly contribute to the decision, in embodiments neurons and/or connections may be removed because they significantly contribute to the decision of a classified class. So, dependent on the class different neurons/connections may the removed or at least deactivated.

The branched neural network as set out before offers significant advantages over conventional AI systems. As set out before, the conventional AI systems rely on different neural networks usable only for users with appropriate user credentials 60. On the other hand, embodiments utilize a branched neural network 120 to partition the neural network in combination with a credential manager 130 that allow users to engage branches 121, 122, ... of the branched neural network 120 based on their particular user credentials 60. Whereas the conventional multiple AI systems have to be trained separately with training data associated with the user credentials 60, the branched neural network 120 according to embodiments can be trained with all training data in one training process - independently of the associated user credentials 60. The training will result in a specialization of branched neural networks 120.

According to embodiments, the trained neural network can be tested with test data to determine which branch 121, 122, ... has been specialized or is needed for which class of sensor data (object class). According to further embodiments, a pre-training for the branches 121, 122, ... can be used to assign certain function (and thus one or more class of sensor data) to one or more branches 121, 122, ... to separated them from all other branches.

Therefore, embodiments overcome the drawback of conventional AI systems that have to train different neural networks with different training data resulting in separate AI systems for the different users (according to their credentials). Thus, in conventional AI systems, based upon the user credentials, different neural networks or subsystems have to be available and started. This makes the respective systems complex because many of the subsystems need to be available and trained dependent on the particular user. Embodiments, on the other hand, overcome this by utilizing one branched neural network 120 that is configured differently for different users (based on the user credentials 60).

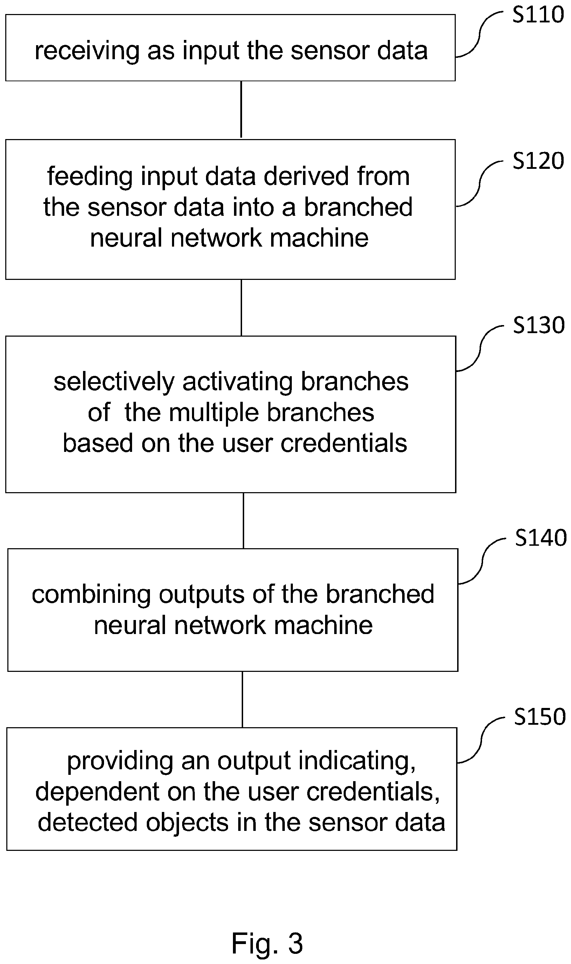

**Fig. 3** depicts a schematical flowchart of an embodiment of a method for detecting objects in sensor data, wherein user credentials are assigned to each user. The method comprises:
- receiving S110 the sensor data;
- feeding S120 input data derived from the sensor data into a branched neural network machine with multiple branches, the multiple branches being configured to operate at least temporarily in parallel and each branch being specialized for branch-specific input data received from the input engine;
- selectively activating S130, by a credential manager, branches of the multiple branches based on the user credentials;
- combining S140 outputs of the branched neural network machine; and
- providing S150 an output indicating, dependent on the user credentials, detected objects in the sensor data.

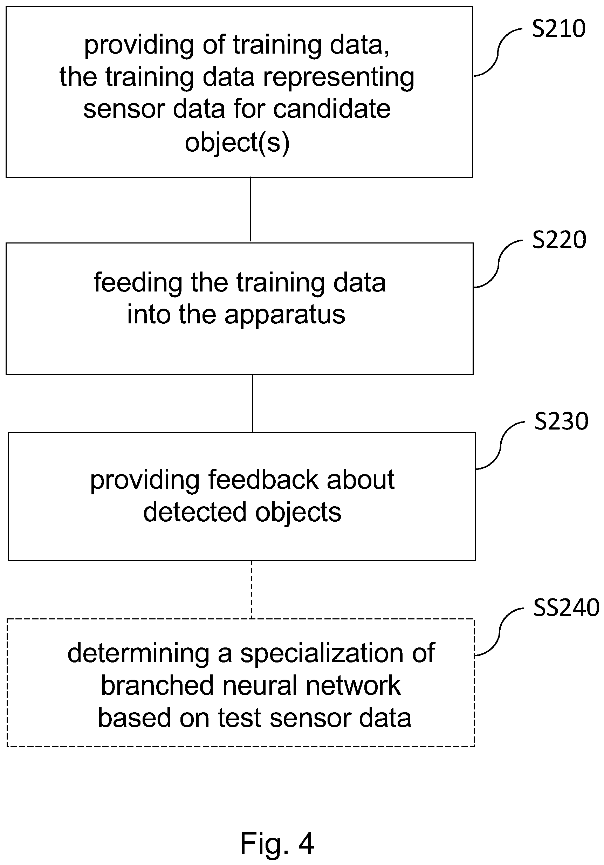

**Fig. 4** depicts a schematical flowchart of another method according to embodiments. This method defines a training the apparatus as described before. The method includes:
- providing S210 of training data, the training data representing sensor data for one or more candidate objects;
- feeding S220 the training data into the apparatus; and
- providing S230 feedback about detected objects.

The training data may include all possible objects, independently of their classification. The branched neural network 120 as described before will specialize in that one or more branches will take over specific functions (i.e. specialized themselves for them) needed for the object detection.

According to further embodiments, the branches 121, 122, ... may be pretrained for specific functions (e.g. related to classified objects). Then, the training may further reinforce the already available specialization achieved by the pre-training.

Optionally, the method for training further includes:
- determining S240 a specialization of the branched neural network 120 based on test sensor data.

The test sensor data may include one or more objects (e.g. classified objects) being assigned to one or more specific user credential. Therefore, the test data may include a particular kind or class of objects such as helicopters, drones, tanks, launch pads etc. which shall be associated to specific branches 121, 122, ....

Additionally, or alternatively, the method of training includes assigning one or more branches 121, 122, ... to at least one class users in accordance with the user credentials 60. This assignment may then be stored in the credential manager 130. The apparatus is thus able to activate for each class of users respective branch(es) to grant them the right to make use of the function(s) provided by the branch(es) 121, 122, ....

A person of skill in the art would readily recognize that steps of the method(s) may be performed by programmed computers. Therefore, this method may thus be a computer-implemented method. Embodiments are also intended to cover program storage devices, e.g., digital data storage media, which are machine or computer readable and encode machine-executable or computer-executable programs or instructions, wherein the instructions perform some or all of the acts of the above-described method(s), when executed on the computer or processor.

As set out before, embodiments overcome the limitations of conventional systems by combining two techniques that ensure that users of the apparatus (and thus the AI system) can only access information they are privileged to. These two techniques are:
1. A mechanism that ensures that different knowledge sources which may need certain access rights are encoded or accessed in separate structures of the neural network (i.e. AI system) such as, but not limited to, different branches 121, 122, ... of a neural network 120 that can be enabled or disabled at inference time based upon user access rights such as user credentials 60. The mechanism further ensures that no knowledge is encoded in other parts to avoid information leakage.
2. A mechanism that is suitable to enable or disable (sub-) structures of the neural network (the branches 121, 122, ...) at inference time based upon the individual user rights of the users such as the user credentials 60.

Thus, embodiments provide the advantage over conventional systems relying on separately trained neural networks that at an inference time only one neural network needs to be loaded and can serve many different users based upon their user credentials 60. Therefore, according to embodiments, not more than one AI system needs to be included in the apparatus and needs to be validated and certified.

In addition, embodiments provide special measures that ensure that certain training data such as classified information can only affect distinct structures of the neural network that does not leak into other parts of the neural network. For this, embodiments use a branched neural network 120 whose topology (disconnected branches 121, 122, ... ) prevents reliably any information leakage which is important to protect confidential information. Embodiments enable or disable those branches 121, 122, ... of the artificial intelligence system based on the user credentials 60 at inference time. For example, only user with sufficient user credentials 60 can access all functions encoded in all branches 121, 122, ... , other users can utilize only a subclass of branches and are thus unable to make use of at least some functions.

The description and drawings merely illustrate the principles of the disclosure. It will thus be appreciated that those skilled in the art will be able to devise various arrangements that, although not explicitly described or shown herein, embody the principles of the disclosure and are included within its scope.

Functions of various elements shown in the figures, including any functional blocks labeled such as "input engine", "neural network" etc., may be provided through the use of dedicated hardware, such as "a signal provider", "a signal processing unit", "a processor", "a controller", etc. as well as hardware capable of executing software in association with appropriate software. Moreover, any entity described herein as "device", may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included.

It should be appreciated by those skilled in the art that any block diagrams herein represent conceptual views of illustrative circuitry embodying the principles of the disclosure. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the Detailed Description, where each claim may stand on its own as a separate example. While each claim may stand on its own as a separate example, it is to be noted that - although a dependent claim may refer in the claims to a specific combination with one or more other claims - other examples may also include a combination of the dependent claim with the subject matter of each other dependent or independent claim. Such combinations are proposed herein unless it is stated that a specific combination is not intended. Furthermore, it is intended to include also features of a claim to any other independent claim even if this claim is not directly made dependent to the independent claim.

It is further to be noted that methods disclosed in the specification or in the claims may be implemented by a device having means for performing each of the respective acts of these methods. Further, it is to be understood that the disclosure of multiple acts or steps or functions disclosed in the specification or claims may not be construed as to be within the specific order. Therefore, the disclosure of multiple acts or functions will not limit these to a particular order unless such acts or functions are not interchangeable for technical reasons. Furthermore, in some examples a single act may include or may be broken into multiple sub acts. Such sub acts may be included and part of the disclosure of this single act unless explicitly excluded.

Furthermore, while each embodiment may stand on its own as a separate example, it is to be noted that in other embodiments the defined features can be combined differently, i.e. a particular feature described in one embodiment may also be realized in other embodiments. Such combinations are covered by the disclosure herein unless it is stated that a specific combination is not intended.

### List of reference signs

- 30: sensor data (e.g. radar data or other data to be analyzed)
- 60: user credentials (e.g. user rights)
- 110: input engine
- 112: input layer
- 115: base neural network machine
- 120: branched neural network machine
- 121,122,221,222: branches
- 130: credential manager
- 140,141,142: combiner(s)
- 145: predictor
- 150: output

## Claims

1. An apparatus for detecting objects in sensor data (30) by users, wherein user credentials (60) are assigned to each user, the apparatus comprising:
an input engine (110) configured to receive as input the sensor data (30);
a branched neural network machine (120) with multiple branches (121, 122, 123, 124, 221, 222, 223), the multiple branches (121, 122, 123, 124, 221, 222, 223) being configured to operate at least temporarily in parallel and each branch being specialized for branch-specific input data received from the input engine (110);
a credential manager (130) configured to selectively activate branches of the multiple branches (121, 122, 123, 124, 221, 222, 223) based on the user credentials (60); and
a combiner (140) configured to combine outputs of the branched neural network machine (120) and to provide output (150) indicating, dependent on the user credentials, detected objects in the sensor data (30).

2. The apparatus according to claim 1,
wherein the input engine (110) includes an input layer (112) and a base neural network machine (115), wherein the input layer (112) is configured to receive as input the sensor data (30) and the user credentials (60),
and wherein branched neural network machine (120) and/or the base neural network machine (115) comprise a convolutional neural network with multiple layers receiving input from the input layer (112).

3. The apparatus according to claim 2, wherein at least one of the branches (121, 122, 123, 124, 221, 222, 223) and/or the base neural network machine (115) are pre-trained with selected training data associated with one or more user credentials (60).

4. The apparatus according to any one of claims 1 to 3, wherein the branched neural network machine (120) is trained with training data, the training data being sensor data (30) of known objects, the training data being:
- labeled training data with labels associated with the user credentials (60); and/or
- unlabeled training data.

5. The apparatus according to claim 4, wherein one or more branches of the multiple branches (121, 122, 123, 124, 221, 222, 223) are specialized for specific subtasks.

6. The apparatus according to according to claim 5, wherein the credential manager (130) is configured to associate the user credentials (60) with the one or more branches and to activate the one or more branches for users with the user credentials (60).

7. The apparatus according to according to any one of claims 1 to 6, wherein the credential manager (130) is configured to selectively activate branches of the multiple branches (121, 122, 123, 124, 221, 222, 223) by at least one of the following:
- controlling parameter of the neural network;
- controlling weights of outputs of the multiple branches;
- controlling a gating mechanism, the gating mechanism being adapted to select branches to execute inputs dependent on the user credentials (60).

8. The apparatus according to any one of claims 1 to 7,
wherein the multiple branches (121, 122, 123, 124, 221, 222, 223) of the branched neural network machine (120) form a multilevel structure including a first level of branches (121, 122, ...) and a second level of branches (221, 222, ...),
and wherein the combiners (140) include a first combiner (141) and a second combiner (142), the first combiner (141) being arranged between the first level of branches (121, 122, ...) and the second level of branches (221, 222, ...) and being configured to collect outputs of the first level of branches (121, 122, ...) and to distribute inputs to the second level of branches (221, 222, ...), the second combiner (142) being configured to combine outputs of the second level of branches (221, 222, ...).

9. The apparatus according to any one of claims 1 to 7, further comprising a predictor (145) configured to predict from the outputs of the branched neural network (120) detected objects in the sensor data (30).

10. A radar object detector comprising:
an input interface for receiving radar data from a radar assembly and user credentials (60) associated with different users;
an apparatus according to any one of claims 1 to 9, wherein the sensor data (30) are the radar data received by the input interface; and
output interface for providing detection results associated with detected objects in the radar data based on the user credentials.

11. A method for detecting objects in sensor data (30) by users, wherein user credentials (60) are assigned to each user, the method comprising:
receiving (S110) as input the sensor data (30);
feeding (S120) input data derived from the sensor data(30) into a branched neural network machine (120) with multiple branches (121, 122, 123, 124, 221, 222, 223), the multiple branches (121, 122, 123, 124, 221, 222, 223) being configured to operate at least temporarily in parallel and each branch being specialized for branch-specific input data received from the input engine (110);
selectively activating (S130), by a credential manager (130), branches of the multiple branches (121, 122, 123, 124, 221, 222, 223) based on the user credentials (60);
combining (S140) outputs of the branched neural network machine (120); and
providing (S150) an output (150) indicating, dependent on the user credentials, detected objects in the sensor data (30).

12. A method of training the apparatus according to any one of claims 1 to 9, the method including:
providing (S210) of training data, the training data representing sensor data (30) for one or more candidate objects, the one or more candidate objects shall be detectable by users dependent on their user credentials (60);
feeding (S220) the training data into the apparatus; and
providing (S230) feedback about detected objects.

13. The method according to claim 12, further comprising:
determining (S240) a specialization of branched neural network (120) based on test sensor data, the test sensor data include one or more objects being assigned to one or more specific user credential (60).

14. A computer-readable storage device comprising instructions for carrying out at least some of the steps of the methods according to claim 11 or claim 12, when the instructions are executed on a data processor.
